# FASCICULE DE BREVET EUROPEEN

(11) **EP 2 782 520 B1**
(45) Date de publication et mention de la délivrance du brevet: **04.01.2017**
(21) Numéro de dépôt: 12795562.3
(22) Date de dépôt: 16.11.2012
(51) Int. Cl.: A61C 17/26, A46B 13/02

(54) **APPAREIL DE BROSSAGE DE DENTS À MULTIPLES SYSTÈMES ROTATIFS DE BROSSAGE**
ZAHNPUTZGERÄT MIT MEHREREN ROTIERENDEN BÜRSTEN
TOOTHBRUSH APPARATUS HAVING MULTIPLE ROTATABLE BRUSHING SYSTEMS

(30) Priorité: 21.11.2011 FR 1160575
(43) Date de publication de la demande: 01.10.2014
(73) Titulaire: Arnoux, Patrick, 13011 Marseille (FR); Ferrer, Jean-Christophe, 91370 Verrieres le Buisson (FR)
(72) Inventeur: Arnoux, Patrick, 13011 Marseille (FR); Ferrer, Jean-Christophe, 91370 Verrieres le Buisson (FR)
(74) Mandataire: Thomas, Nadine
(86) Numéro de dépôt international: PCT/FR2012/052645
(87) Numéro de publication internationale: WO 2013/076408

(56) Documents cités:
- WO-A1-95/11636
- FR-A1- 2 489 120
- FR-A1- 2 926 211

## Description

### DOMAINE TECHNIQUE DE L'INVENTION

L'invention se rapporte au domaine de l'hygiène buccale et plus particulièrement aux appareils de brossage de dents ayant plusieurs systèmes rotatifs de brossage. L'invention peut éventuellement concerner un usage animal.

Dans tous les cas il s'agit de réaliser un brossage particulier des dents, plus précisément un brossage depuis la gencive vers l'extrémité des dents c'est-à-dire de haut en bas pour la dentition supérieure et de bas en haut pour les dents inférieures. Ce type de brossage s'est révélé le plus efficace depuis quelques temps déjà.

### ETAT DE LA TECHNIQUE ANTERIEURE

Ainsi des documents décrivent des brosses à dents à multiples systèmes rotatifs de brossage. Par 'système rotatif de brossage' on entend une brosse ou brossette de forme extérieure cylindrique et constituée de poils orientés radialement, soit perpendiculairement à son axe longitudinal.

Dans le document EP 0 108 097 B1 est proposée une brosse à dents électrique comprenant au moins deux brosses rotatives dont les axes de rotation sont parallèles entre eux. Un mécanisme placé dans le manche de la brosse à dents assure une contra rotation des brosses. Par ailleurs plusieurs modules amovibles supportant des brosses peuvent être adaptés au manche, en fonction des besoins d'utilisation. Un capot rigide enveloppant les brosses est en outre prévu au niveau de la partie avant du système qui se fixe de manière amovible (par clippage) sur la partie arrière du système. Une telle brosse à dents, constituée de plusieurs pièces adaptables les unes aux autres, est donc relativement complexe à fabriquer et peut se révéler fragile à l'utilisation.

On connait encore la demande FR 2 662 598 A1 qui divulgue une brosse à dents dite rotative, pour le brossage simultané intérieur et extérieur de la dentition. Cet appareil de brossage comprend deux brosses à axes de rotation parallèles et susceptibles de tourner en sens opposés. De plus les brosses sont pourvues de carénages arrondis au niveau de leurs extrémités, disposés sur les faces extérieures de chaque brosse. Ces carénages évitent à la langue et à l'intérieur de la joue d'être frottés par les brosses, et donc irrités. Cependant ces carénages sont ici des pièces rigides additionnelles susceptibles de se casser, de s'abîmer au contact des dents ou suite à un brusque mouvement de l'appareil de brossage dans la bouche de l'utilisateur. Le plus grand danger étant que le carénage se casse et qu'un petit morceau soit avalé par l'utilisateur.

Dans le même domaine on connait la demande de brevet EP 0 488 971 A2 qui décrit un appareil de brossage à deux brosses contra rotatives partiellement entourées d'un capot faisant partie de l'extrémité portant les deux brosses. Là encore on trouve un élément de protection rigide, de forme complexe, qui rend donc la fabrication non aisée. Bien entendu les mêmes inconvénients que ceux énoncés ci-dessus sont ici présents.

L'art antérieur comprend en outre le document FR 2 489 120 qui montre une brosse à dents du même type que celles qui viennent d'être décrites, et dont les deux brosses sont en partie masquées par un écran externe disposé à l'opposé de la zone, située entre les deux brosses, où prennent place les dents. L'écran externe peut être constitué de deux demi-cylindres ou bien d'une forme semi ovalisée recouvrant les deux brosses. Encore une fois cet écran représente une pièce rigide et fragile, susceptible de se casser dans la bouche de l'utilisateur. De plus une telle pièce représente un encombrement additionnel pas forcément agréable pour l'utilisateur.

Un carénage du même type est décrit dans le brevet EP 0 725 602 B1 où par conséquent les mêmes inconvénients sont présents.

L'art antérieur comprend aussi le document FR 2 929 211 A1 qui décrit un appareil de brossage à double système rotatif de brossage comportant un corps formant manche et une tête fixée sur ledit manche, laquelle tête est pourvue de brosses contrarotatives de forme cylindrique, adjacentes, d'axes sensiblement parallèles, supportées chacune au moins à leur extrémité distale par un palier et entraînées chacune par un arbre au niveau de la tête, lesdits arbres étant flexibles et chacun des dits deux paliers qui les supportent, l'un situé à leur extrémité distale et l'autre du côté du corps, étant monté sur un support, permettant l'écartement des deux brosses l'une par rapport à l'autre et assurant alors le rapprochement de l'une vers l'autre. L'invention consiste en ce que le support comporte quatre branches flexibles, autour d'une pièce centrale servant à la fixation dudit support sur la tête constituée d'un bras unique, le support est réalisé en élastomère thermoplastique sans plastifiant tel le polyéther bloc amide connu sous la dénomination commerciale Pebax®.

### EXPOSE DE L'INVENTION

L'invention vise à remédier aux inconvénients de l'état de la technique et notamment à prévoir un appareil de brossage de dents dont les brosses sont partiellement recouvertes d'un élément de protection visant à diminuer les projections de particules ou autres éléments directement dans la bouche de l'utilisateur. Bien entendu l'élément de protection évite le contact direct de la ou des brosses avec la langue ou l'intérieur de la joue de l'utilisateur.

Pour ce faire est proposé selon l'invention un appareil de brossage de dents à multiples systèmes rotatifs de brossage, comprenant un corps sur lequel est fixée une tête pourvue de brosses contra rotatives, adjacentes, de forme extérieure globalement cylindrique, d'axe longitudinal parallèles entre eux, chaque brosse étant entrainée en rotation par un arbre et étant supportée à chacune de ses extrémités par un palier faisant partie d'un support qui détermine l'écartement entre les axes longitudinaux desdites brosses, ledit support comprenant au moins deux branches flexibles orientées sensiblement perpendiculairement auxdits axes longitudinaux desdites brosses, de telle sorte que leurs extrémités respectives constituent lesdits paliers, lesdites branches flexibles étant liées à une embase apte à assurer la fixation dudit support sur la tête.

Selon l'invention l'appareil comprend en outre un élément souple entourant partiellement l'une au moins desdites brosses ; cet élément souple est avantageusement formé en une seule pièce avec ledit support.

Cette caractéristique accroit le confort pour l'utilisateur qui ne perçoit ainsi pas de pièce rigide ou pointue dans sa bouche. Par ailleurs et comme il sera précisé plus tard l'élément souple est facile à réaliser puisque préférentiellement moulé en une seule pièce avec le support de la ou des brosses.

Selon un mode de réalisation préféré, l'élément souple entoure partiellement chacune desdites brosses.

De façon particulièrement avantageuse, l'élément souple présente une forme semi cylindrique disposée à une distance constante de la surface extérieure cylindrique d'au moins une desdites brosses. L'élément souple constitue en quelque sorte une seconde peau autour de la ou des brosses, très bien tolérée par l'utilisateur.

De façon préférée, ledit élément souple recouvre entre le tiers et la moitié de la surface extérieure de l'une au moins desdites brosses.

Avantageusement, ledit élément souple est réalisé en une matière élastomère thermoplastique.

De façon intéressante, ledit élément souple présente une dureté comprise entre 20 et 35 shore D.

Par ailleurs, ledit élément souple présente un module d'élasticité compris entre 10 et 30 MPa.

Ledit élément souple est réalisé en pebax ®. Et il présente une épaisseur moyenne de l'ordre de quelques µm.

Avantageusement, l'élément souple et le support sont réalisés par extrusion.

Les éléments caractéristiques, non limitatifs, énoncés ci-dessus permettent une fabrication aisée, peu couteuse ; ils assurent une parfaite tolérance de la part de l'utilisateur ; un tel élément souple ne présente bien entendu pas les inconvénients cités ci-dessus relativement à l'art antérieur. Notamment il ne peut pas se casser dans la bouche de l'utilisateur.

Le choix du matériau constitutif de l'élément souple et du support est inattendu car de façon usuelle cette matière est utilisée dans le domaine alimentaire, par exemple pour former des ustensiles ou contenants alimentaires.

### BREVE DESCRIPTION DES FIGURES

D'autres caractéristiques, détails et avantages de l'invention ressortiront à la lecture de la description qui suit, en référence aux figures annexées, qui illustrent :
- la figure 1, une vue de coupe longitudinale d'un appareil de brossage selon un premier mode de réalisation de l'invention ;
- la figure 2, une vue de dessous d'un appareil de brossage selon le premier mode de réalisation de l'invention ;
- la figure 3, une perspective du dessous-arrière d'un appareil de brossage selon le premier mode de réalisation de l'invention ;
- la figure 4, une perspective-avant d'un appareil de brossage selon le premier mode de réalisation de l'invention ; et
- la figure 5, une autre perspective-avant d'un appareil de brossage selon le premier mode de réalisation de l'invention.

Pour plus de clarté, les éléments identiques ou similaires sont repérés par des signes de référence identiques sur l'ensemble des figures.

### DESCRIPTION DETAILLEE D'UN MODE DE REALISATION

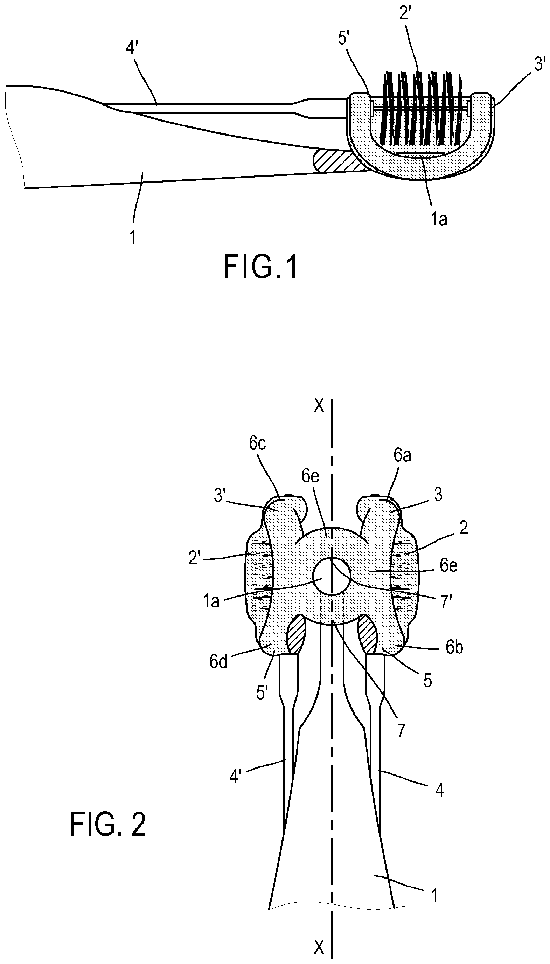

Comme visible notamment sur les figures 1 et 2, l'appareil de brossage selon l'invention comprend une tête 1 qui peut être connectée, déconnectée vis-à-vis d'un corps, non représenté. La tête 1 est pourvue à son extrémité de deux brosses rotatives 2, 2' de forme extérieure cylindrique, adjacentes et d'axes longitudinaux parallèles entre eux et parallèles à l'axe longitudinal XX de la tête 1.

Les brosses sont avantageusement entrainées en rotation, de façon contra rotative, par un mécanisme non représenté et connu en lui-même qui de ce fait ne sera pas davantage décrit.

Les brosses sont supportées à chacune de leurs extrémités par un palier ; il est donc prévu deux paliers proximaux 5, 5' et deux paliers distaux 3, 3' ; les paliers font partie et /ou sont montés sur un support 6 permettant le positionnement relatif des brosses 2, 2'. Selon un exemple préféré de réalisation de l'invention, le support 6 comporte quatre branches flexibles 6a, 6b, 6c, 6d positionnées autour d'une pièce centrale 6e servant à la fixation dudit support 6 sur la tête 1. Les branches sont sensiblement parallèles entre elles, et perpendiculaires à l'axe XX. La fixation du support 6 sur la tête 1 peut être réalisée comme décrit dans la demande FR 2 626 210, à l'aide de deux orifices, respectivement 7 et 7', d'axes perpendiculaires entre eux ; le premier orifice 7 est coaxial avec l'axe XX de la tête 1 ; le second orifice 7' présente un axe sensiblement parallèle aux branches 6a, 6b, 6c et 6d et permet l'encliquetage du support 6 sur la tête 1, plus précisément sur un plot 1a formé à l'extrémité distale de la tête 1.

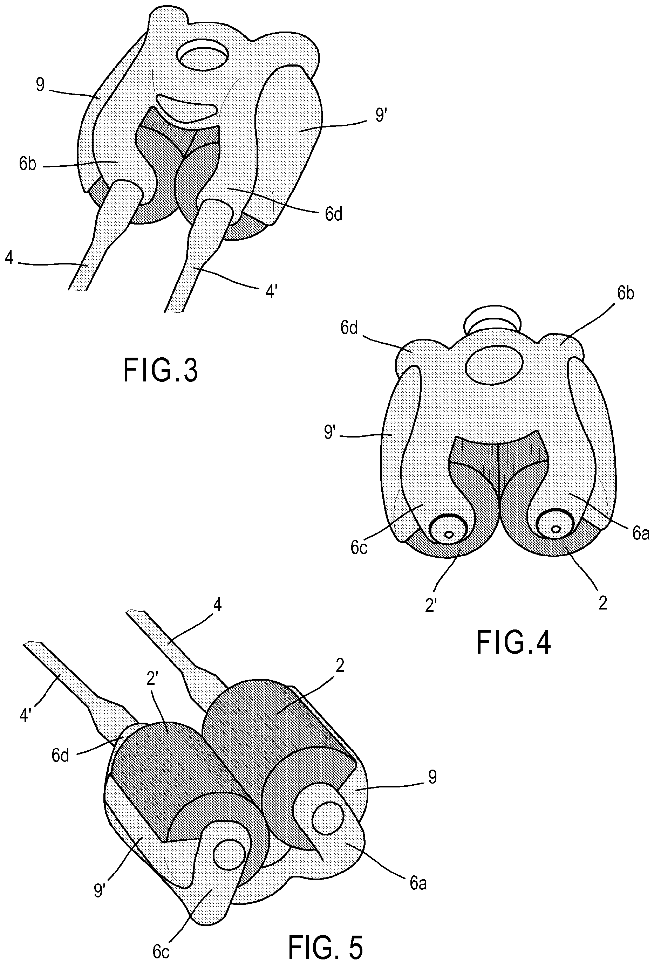

Comme visible plus particulièrement sur les figures 3 à 5, faisant partie du support 6, un élément souple 9, 9' est prévu, qui entoure partiellement l'une au moins des deux brosses 2, 2'. L'élément souple 9, 9' présente une forme générale semi cylindrique et est disposé à une distante faible, quelques mm, de la surface extérieure de la ou des brosses 2, 2'. Cet élément 9, 9' forme une sorte de voile de protection autour d'au moins une brosse 2, 2', de préférence autour des deux brosses. L'élément souple 9, 9' prend appui sur chacune des branches flexibles mais rigides 6a, 6b, 6c, 6d et il est conformé pour entourer partiellement au moins une desdites brosses 2, 2'. Il recouvre entre le tiers et la moitié d'au moins une desdites brosses 2, 2'.

Afin de réaliser efficacement et facilement un tel élément 9, une matière élastomère thermoplastique est choisie. De façon préférée et positivement expérimentée le pebax ® commercialisé par la société Arkéma, est utilisé. Cette matière est souple lorsqu'elle est étirée sous forme de film comme c'est le cas dans la présente invention. Plus précisément un élastomère de type pebax ® 3533 SA 01 ou encore 2533 SA 01 est préféré.

L'épaisseur moyenne de l'élément 9, 9' est de l'ordre de quelques µm avec un module d'élasticité compris entre environ 10 et 30 MPa. Une dureté comprise entre 20 et 35 shore D est choisie. Sa porosité permet une excellente perméabilité tout en offrant une barrière à l'eau et aux bactéries.

Avec de telles caractéristiques l'élément 9, 9' forme donc un voile souple qui recouvre au moins une brosse 2, 2'. Ce voile est parfaitement toléré par l'utilisateur et il évite bien entendu tout frottement de l'une au moins des brosses avec l'intérieur de la joue, la langue et/ou les gencives de l'utilisateur. De façon avantageuse le voile permet à l'utilisateur d'appuyer par exemple avec la langue ou les muscles des joues, directement sur le voile, sans se blesser ; ceci augmente la pression sur les dents sans aucune gêne ni inconfort pour l'utilisateur. Un meilleur brossage est de ce fait obtenu.

Par ailleurs l'élément 9, 9' étant monobloc avec le support 6 cet ensemble est peu fragile et résiste bien aux efforts, vibrations et secousses créés par la rotation des brosses ainsi que par le contact avec les dents.

Cet ensemble formé par le support 6 et les éléments 9, 9' est fabriqué de façon simple, par un procédé classique et approprié d'extrusion. Les paramètres de fabrication sont choisis par l'homme de métier.

## Revendications

1. Appareil de brossage de dents à multiples systèmes rotatifs de brossage, comprenant un corps sur lequel est fixée une tête (1) pourvue de brosses contra rotatives (2, 2'), adjacentes, de forme extérieure globalement cylindrique, d'axe longitudinal parallèles entre eux, chaque brosse (2, 2') étant entrainée en rotation par un arbre (4, 4') et étant supportée à chacune de ses extrémités par un palier (3, 3', 5, 5') faisant partie d'un support (6) qui détermine l'écartement entre les axes longitudinaux desdites brosses, ledit support (6) comprenant au moins deux branches flexibles (6a, 6b, 6c, 6d) orientées sensiblement perpendiculairement auxdits axes longitudinaux, de telle sorte que leurs extrémités respectives constituent lesdits paliers, lesdites branches flexibles étant liées à une embase (6 e) apte à assurer la fixation dudit support (6) sur la tête (1) **caractérisé en ce qu'**il comprend en outre un élément souple (9, 9') entourant partiellement l'une au moins desdites brosses (2) et formé en une seule pièce avec ledit support (6) et **en ce que** ledit élément souple (9, 9') présente une épaisseur moyenne de l'ordre de quelques µm.

2. Appareil de brossage de dents à multiples systèmes rotatifs de brossage selon la revendication 1 **caractérisé en ce que** ledit élément souple entoure partiellement chacune desdites brosses (2, 2').

3. Appareil de brossage de dents à multiples systèmes rotatifs de brossage selon l'une quelconque des revendications précédentes **caractérisé en ce que** ledit élément souple (9, 9') présente une forme semi cylindrique disposée à une distance constante de la surface extérieure cylindrique d'au moins une desdites brosses.

4. Appareil de brossage de dents à multiples systèmes rotatifs de brossage selon l'une quelconque des revendications précédentes **caractérisé en ce que** ledit élément souple (9, 9') recouvre entre le tiers et la moitié de la surface extérieure de l'une au moins desdites brosses.

5. Appareil de brossage de dents à multiples systèmes rotatifs de brossage selon l'une quelconque des revendications précédentes **caractérisé en ce que** ledit élément souple (9, 9') est réalisé en une matière élastomère thermoplastique.

6. Appareil de brossage de dents à multiples systèmes rotatifs de brossage selon l'une quelconque des revendications précédentes **caractérisé en ce que** ledit élément souple (9, 9') présente une dureté comprise entre 20 et 35 shore D.

7. Appareil de brossage de dents à multiples systèmes rotatifs de brossage selon l'une quelconque des revendications précédentes **caractérisé en ce que** ledit élément souple (9, 9') présente un module d'élasticité compris entre 10 et 30 MPa.

8. Appareil de brossage de dents à multiples systèmes rotatifs de brossage selon l'une quelconque des revendications précédentes **caractérisé en ce que** ledit élément souple (9, 9') est réalisé en pebax ®.

9. Appareil de brossage selon l'une quelconque des revendications précédentes **caractérisé en ce que** l'élément souple (9, 9') et le support (6) sont réalisés par extrusion.

## Patentansprüche

1. Zahnputzgerät mit mehreren Drehbürstensystemen, das einen Körper mit einem darauf befestigten Kopf (1) umfasst, welcher mit nebeneinander befindlichen, generell zylindrischen, gegenläufig drehenden Bürsten (2, 2') mit parallel zueinander verlaufenden Längsachsen versehen ist, wobei jede Bürste (2, 2') durch eine Welle (4, 4') rotierend angetrieben und an jedem ihrer Enden durch ein Lager (3, 3', 5, 5') gestützt wird, das zu einer Halterung (6) gehört, welche den Abstand zwischen den Längsachsen besagter Bürsten bestimmt, wobei besagte Halterung (6) mindestens zwei biegsame Bügel (6a, 6b, 6c, 6d) umfasst, die im Wesentlichen senkrecht zu den besagten Längsachsen ausgerichtet sind, so dass deren Enden die Lager bilden, wobei besagte biegsame Bügel mit einem Sockel (6 e) verbunden sind, der in der Lage ist, die Befestigung besagter Halterung (6) am Kopf (1) zu gewährleisten, **dadurch gekennzeichnet, dass** sie des Weiteren ein flexibles Element (9, 9') umfasst, dass mindestens eine der besagten Bürsten (2) umgibt und mit besagter Halterung (6) aus einem einzigen Stück geformt ist, und darin, dass besagtes flexibles Element (9, 9') eine durchschnittliche Stärke von einigen Mikrometern aufweist.

2. Zahnputzgerät mit mehreren Drehbürstensystemen nach Anspruch 1, **dadurch gekennzeichnet, dass** besagtes flexibles Element jede der Bürsten (2, 2') teilweise umgibt.

3. Zahnputzgerät mit mehreren Drehbürstensystemen nach einem der vorhergehenden Ansprüche, **dadurch gekennzeichnet**, das besagtes flexibles Element (9, 9') eine halbzylindrische Form aufweist, die in gleichbleibendem Abstand von der zylindrischen Außenfläche mindestens einer der besagten Bürsten entfernt ist.

4. Zahnputzgerät mit mehreren Drehbürstensystemen nach einem der vorhergehenden Ansprüche, **dadurch gekennzeichnet, dass** besagtes flexibles Element (9, 9') zwischen einem Drittel und der Hälfte der Außenfläche mindestens einer der besagten Bürsten abdeckt.

5. Zahnputzgerät mit mehreren Drehbürstensystemen nach einem der vorhergehenden Ansprüche, **dadurch gekennzeichnet, dass** besagtes flexibles Element (9, 9') aus einem thermoplastischen Elastomer hergestellt wird.

6. Zahnputzgerät mit mehreren Drehbürstensystemen nach einem der vorhergehenden Ansprüche, **dadurch gekennzeichnet, dass** besagtes flexibles Element (9, 9') eine Härte von 20 bis 35 Shore D aufweist.

7. Zahnputzgerät mit mehreren Drehbürstensystemen nach einem der vorhergehenden Ansprüche, **dadurch gekennzeichnet, dass** besagtes flexibles Element (9, 9') ein Modul mit einer Elastizität von 10 bis 30 MPa aufweist.

8. Zahnputzgerät mit mehreren Drehbbürstensystemen nach einem der vorhergehenden Ansprüche, **dadurch gekennzeichnet, dass** besagtes flexibles Element (9, 9') aus Pebax^{®} hergestellt ist.

9. Zahnputzgerät nach einem der vorhergehenden Ansprüche, **dadurch gekennzeichnet, dass** das flexible Element (9, 9') und die Halterung (6) im Strangpressverfahren hergestellt werden.

## Claims

1. A toothbrush apparatus having multiple rotatable brushing systems, comprising a body onto which a head (1) is attached, with said head being provided with adjacent counter-rotating brushes (2, 2') having an overall cylindrical outer shape and mutually parallel longitudinal axes, with each brush (2, 2') being rotated by a shaft (4, 4') and supported, at each of the ends thereof, by a bearing (3, 3', 5, 5') forming part of a holder (6) which defines the distance between the longitudinal axes of said brushes, with said holder (6) comprising at least two flexible arms (6a, 6b, 6c, 6d) oriented substantially perpendicular to said longitudinal axes, so that their respective ends form said bearings, with said flexible arms being connected to a base (6e) capable of ensuring the attachment of said holder (6) onto the head (1), **characterized in that** it further comprises a flexible element (9, 9') partially surrounding at least one of said brushes (2), and integrally produced with said holder (6) and **in that** said flexible element (9, 9') has an average thickness of the order of a few µms.

2. A toothbrush apparatus having multiple rotatable brushing systems according to claim 1, **characterized in that** said flexible element partially surrounds each of said brushes (2, 2').

3. A toothbrush apparatus having multiple rotatable brushing systems according to any one of the preceding claims, **characterized in that** said flexible element (9, 9') has a semi-cylindrical shape positioned at a constant distance from the cylindrical outer surface of at least one of said brushes.

4. A toothbrush apparatus having multiple rotatable brushing systems according to any one of the preceding claims, **characterized in that** said flexible element (9, 9') covers from one-third to half of the outer surface of at least one of said brushes.

5. A toothbrush apparatus having multiple rotatable brushing systems according to any one of the preceding claims, **characterized in that** said flexible element (9, 9') is made of a thermoplastic elastomeric material.

6. A toothbrush apparatus having multiple rotatable brushing systems according to any one of the preceding claims, **characterized in that** said flexible element (9, 9') has a Shore D hardness of 20 to 35.

7. A toothbrush apparatus having multiple rotatable brushing systems according to any one of the preceding claims, **characterized in that** said flexible element (9, 9') has a modulus of elasticity ranging from 10 to 30MPa.

8. A toothbrush apparatus having multiple rotatable brushing systems according to any one of the preceding claims, **characterized in that** said flexible element (9, 9') is made of Pebax ^{®}.

9. A toothbrush apparatus according to any one of the preceding claims, **characterized in that** the flexible element (9, 9') and the holder (6) are obtained by extrusion.
